# EUROPÄISCHE PATENTANMELDUNG

(11) **EP 4 060 587 A1**
(43) Veröffentlichungstag der Anmeldung: **21.09.2022**
(21) Anmeldenummer: 21163245.0
(22) Anmeldetag: 17.03.2021
(51) Int. Cl.: G06Q 20/32, G06Q 30/06, G06Q 20/20, G06Q 20/36, G06Q 20/38

(54) **COMPUTERIMPLEMENTIERTES VERFAHREN FÜR DEN ZUGRIFF AUF EIN GUTHABENKONTO, DATENVERARBEITUNGSVORRICHTUNG FÜR DEN ZUGRIFF AUF EIN GUTHABENKONTO UND VERANSTALTUNGSSYSTEM**

(71) Anmelder: Diel, Julian, 70839 Gerlingen (DE)
(72) Erfinder: Diel, Julian, 70839 Gerlingen (DE)
(74) Vertreter: Patentanwälte Magenbauer & Kollegen Partnerschaft mbB

(57) **Zusammenfassung**

Die Erfindung betrifft ein computerimplementiertes Verfahren für den Zugriff auf ein Guthabenkonto (16), umfassend die Schritte: Übernehmen eines mit einer Veranstaltung verknüpften und von einer externen Veranstaltungsdatenbank (2) bereitgestellten Veranstaltungscodes für eine von einem Benutzer ausgewählte Veranstaltung; Abrufen von gespeicherten Benutzerdaten aus einem, insbesondere lokalen, Speicher; Verknüpfen des übernommenen Veranstaltungscodes mit den Benutzerdaten; Durchführen einer Benutzerabfrage zum Auswählen eines Geldbetrags durch den Benutzer; Durchführen eines Bezahlvorgangs zur Übertragung des mit dem Veranstaltungscode und den Benutzerdaten verknüpften Geldbetrags auf ein, insbesondere in der Veranstaltungsdatenbank (2) geführtes, Guthabenkonto (16); Empfangen eines vom Guthabenkonto (16) bereitgestellten Guthaben-Datensatzes; Aktivieren einer Schreibfunktion durch den Benutzer; Ansteuerung einer Ausgabeschnittstelle, insbesondere eines Nahfeld-Kommunikationsgeräts, und Durchführen des, insbesondere kontaktlosen, Schreibvorgangs für den Guthaben-Datensatz oder für ein aus dem Guthaben-Datensatz erstelltes Guthaben-Datenpaket, auf einen separat ausgebildeten, benutzerspezifischen Datenträger (17).

## Beschreibung

Die Erfindung betrifft ein computerimplementiertes Verfahren für den Zugriff auf ein Guthabenkonto, eine Datenverarbeitungsvorrichtung für den Zugriff auf ein Guthabenkonto und ein Veranstaltungssystem.

Bei Veranstaltungen wie Sportwettkämpfen, Konzerten sowie beim Betrieb von Einrichtungen wie Schwimmbädern oder Campingplätzen besteht ein großes Interesse daran, bei einer Inanspruchnahme von Leistungen eines Veranstalters oder Betreibers die damit verbundenen Bezahlvorgänge bargeldlos und kontaktlos durchführen zu können, um eine rasche und komfortable Abwicklung von Bezahlvorgängen gewährleisten zu können.

Hierzu sind bereits eine Vielzahl von unterschiedlichen Vorgehensweisen bekannt, die sich in Abhängigkeit von der Art der Veranstaltung bzw. der genutzten Einrichtung erheblich unterscheiden. Bei Sportveranstaltungen wird häufig mit veranstalterspezifischen Guthabenkarten gearbeitet, die im Vorfeld vom Veranstalter ausgegeben werden und auf die ein Benutzer vor und/oder während der Veranstaltung einen Geldbetrag laden kann, um diesen dann während einer oder mehrerer Veranstaltungen des Veranstalters für Bezahlvorgänge nutzen zu können. Bei den Betreibern von Campingplätzen oder Schwimmbädern wird beim Eintreffen des Kunden eine für den Kunden registrierte Kundenkarte ausgegeben, die während des Aufenthalts in der Einrichtung für Bezahlvorgänge genutzt werden kann, wobei Abrechnung der in Anspruch genommenen Leistungen am Ende des Aufenthalts bei Verlassen der Einrichtung vorgenommen wird und hierbei wahlweise eine Barzahlung oder eine elektronische Bezahlung der aufgelaufenen Verbindlichkeiten erfolgt.

Die Aufgabe der Erfindung besteht darin, ein computerimplementiertes Verfahren für den Zugriff auf ein Guthabenkonto, eine Datenverarbeitungsvorrichtung für den Zugriff auf ein Guthabenkonto und ein Veranstaltungssystem bereitzustellen, mit denen Bezahlvorgänge vereinfacht werden können.

Diese Aufgabe wird gemäß einem ersten Erfindungsaspekt mit Hilfe eines computerimplementierten Verfahrens gelöst, das die folgenden Schritte umfasst: Übernehmen eines mit einer Veranstaltung verknüpften und von einer externen Veranstaltungsdatenbank bereitgestellten Veranstaltungscodes für eine von einem Benutzer ausgewählte Veranstaltung; Abrufen von gespeicherten Benutzerdaten aus einem, insbesondere lokalen, Speicher; Verknüpfen des übernommenen Veranstaltungscodes mit den Benutzerdaten; Durchführen einer Benutzerabfrage zum Auswählen eines Geldbetrags durch den Benutzer; Durchführen eines Bezahlvorgangs zur Übertragung des mit dem Veranstaltungscode und den Benutzerdaten verknüpften Geldbetrags auf ein, insbesondere in der Veranstaltungsdatenbank geführtes, Guthabenkonto; Empfangen eines vom Guthabenkonto bereitgestellten Guthaben-Datensatzes; Aktivieren einer Schreibfunktion durch den Benutzer; Ansteuerung einer Ausgabeschnittstelle, insbesondere eines Nahfeld-Kommunikationsgeräts, und Durchführen des, insbesondere kontaktlosen, Schreibvorgangs für den Guthaben-Datensatz oder für ein aus dem Guthaben-Datensatz erstelltes Guthaben-Datenpaket, auf einen separat ausgebildeten, benutzerspezifischen Datenträger.

Dieses computerimplementierte Verfahren kann insbesondere als Applikation (App) auf einem Mobiltelefon durchgeführt werden, wobei Benutzereingaben vorzugsweise durch Fingerkontakt mit einem berührempfindlichen Bildschirm des Mobiltelefons oder durch Spracheingabe vorgenommen werden. Typischerweise ist eine solche Applikation auf wenigstens einem der weit verbreiteten Mobiltelefon-Betriebssysteme Android des Herstellers Google oder iOS des Herstellers Apple lauffähig.

In der Veranstaltungsdatenbank, die beispielsweise von einem Dienstleistungsunternehmen als Service für eine Vielzahl von Veranstaltern und Veranstaltungen zur Verfügung gestellt werden kann, können die Veranstalter alle Daten hinterlegen, die für einen Abruf durch einen interessierten Benutzer von Interesse sind. Bevorzugt ist vorgesehen, dass die Veranstaltungsdatenbank über einen Internetzugriff von einem Benutzer angesprochen werden kann, wobei der Benutzer für diesen Internetzugriff ein digitales Endgerät, insbesondere einen Personalcomputer oder ein Mobiltelefon, einsetzen kann.

Eine Auswahl der Veranstaltung kann auf unterschiedliche Weisen vorgenommen werden und ist nicht als zwingender Bestandteil des computerimplementierten Verfahrens anzusehen.

Nach einer Auswahl einer in der externen Veranstaltungsdatenbank hinterlegten Veranstaltung durch einen Benutzer erfolgt eine Bereitstellung eines Veranstaltungscodes von der externen Veranstaltungsdatenbank an das computerimplementierte Verfahren. Der Veranstaltungscode kann als statische Datensatz ausgebildet sein, so dass jeder Benutzer, der auf die externe Veranstaltungsdatenbank zugreift und die Veranstaltung ausfällt, den stets gleichen Veranstaltungscode erhält. Alternativ kann der Veranstaltungscode auch wenigstens ein variables Datum enthalten, beispielsweise eine Zeitangabe, die den Zeitpunkt der Auswahl der Veranstaltung durch den Benutzer repräsentiert. Hiermit können bei der weiteren Nutzung des Veranstaltungscodes besondere Funktionen wie beispielsweise Rabattfunktionen bei Bezahlvorgängen verbunden werden.

Bei einem nachfolgenden Verfahrensschritt ist vorgesehen, den Veranstaltungscode mit Benutzerdaten, die in einem benutzerspezifischen Speicher gespeichert sind, zu verknüpfen. Beispielsweise kann vorgesehen sein, dass der Benutzer bei einer vorausgegangenen Durchführung des Verfahrens gewisse Benutzerdaten wie beispielsweise Name, Alter, Anschrift, Kontonummer in eine entsprechende Eingabemaske eingegeben hat und die dort angegebenen Benutzerdaten in dem Speicher, bei dem es sich insbesondere um einen Speicher eines Mobiltelefons handeln kann, gespeichert wurden. Gegebenenfalls kann vorgesehen sein, dass im Zuge der Verknüpfung des Veranstaltungscodes mit den Benutzerdaten auch eine oder mehrere Benutzerabfragen vorgenommen werden, um beispielsweise noch zusätzliche Daten des Benutzers in die Benutzerdaten aufnehmen zu können, die gegebenenfalls zum Besuch der ausgewählten Veranstaltung erforderlich sind.

In einem nachfolgenden Verfahrensschritt ist vorgesehen, einen vom Benutzer bereitgestellten Geldbetrag auf ein ausschließlich mit der ausgewählten Veranstaltung verknüpftes Guthabenkonto zu übertragen. Hierbei kann vorgesehen sein, dass in dem Veranstaltungscode eine Kontoinformation enthalten ist, so dass keine Benutzereingabe erforderlich, um das korrekte Guthabenkonto auszuwählen. Durch dies Maßnahmen kann beispielsweise vermieden werden, dass der vom Benutzer bereitgestellte Geldbetrag für anderweitige Zwecke abseits der gewählten Veranstaltung verbraucht wird oder auf ein falsches Guthabenkonto übertragen wird. Für die Übertragung eines Geldbetrags auf das Guthabenkonto erfolgt zunächst eine Benutzerabfrage, bei der der Benutzer beispielsweise durch Eingabe eines Geldbetrags oder durch Anwählen eines Auswahlfelds, das einen vorgegebenen Geldbetrag repräsentiert, den gewünschten Geldbetrag vorgehen kann. In einem nachfolgenden Schritt wird ein Datensatz, der den gewünschten Geldbetrag, den Veranstaltungscode und die Benutzerdaten repräsentiert, an das Guthabenkonto bereitgestellt. Bei diesem Guthabenkonto handelt es sich vorzugsweise um eine externe Guthabendatenbank, insbesondere um eine der externen Veranstaltungsdatenbank zugehörige Guthabendatenbank.

Sobald der Datensatz für den Geldbetrag, der mit dem Veranstaltungscode und den Benutzerdaten verknüpft ist, auf dem Guthabenkonto registriert wurde, ist in einem nachfolgenden Verfahrensschritt vorgesehen, dass das Guthabenkonto einen Guthaben-Datensatz bereitgestellt, der das auf dem Guthabenkonto hinterlegte Guthaben repräsentiert und der seinerseits ebenfalls mit dem Veranstaltungscode und den Benutzerdaten verknüpft ist.

Für die weitere Verfahrensdurchführung ist vorgesehen, den Guthaben-Datensatz oder ein aus dem Guthaben-Datensatz erstelltes Guthaben-Datenpaket auf einen separat ausgebildeten, benutzerspezifischen Datenträger zu übertragen. Hierzu wird eine Benutzerabfrage durchgeführt, mit der der Benutzer bestätigen kann, dass der benutzerspezifischen Datenträger mit der Ausgabeschnittstelle gekoppelt ist oder koppelbar ist. Bei Vorliegen einer positiven Bestätigung durch den Benutzer erfolgt dann eine Ansteuerung der Ausgabeschnittstelle, bei der es sich insbesondere um ein Nahfeld-Kommunikationsgerät handeln kann, um den Guthaben-Datensatz oder das Guthaben-Datenpaket auf den benutzerspezifischen Datenträger zu schreiben. Bei dem benutzerspezifischen Datenträger kann es sich insbesondere um einen integrierten elektronischen Schaltkreis handeln, der zur Speicherung von Daten ausgebildet ist. Bevorzugt ist vorgesehen, dass der benutzerspezifischen Datenträger für eine kontaktlose Datenübertragung unter Ausnutzung elektromagnetischer Wellen ausgebildet ist. Besonders bevorzugt wird für die kontaktlose Datenübertragung einer der im Bereich der Mobiltelefone etablierten Datenübertragungsverfahren Bluetooth oder NFC (Near Field Communication) genutzt. Hierbei ist dem NFC-Datenübertragungsverfahren der Vorzug zu geben, da aufgrund der extrem kurzen Reichweite für dieses Datenübertragungsverfahren eine Manipulation durch Dritte äußerst schwierig ist. Beispielhaft ist vorgesehen, dass der benutzerspezifischen Datenträger in einem Armband oder einer Armbanduhr, insbesondere einer Smartwatch, oder einem Kleidungsstück eingearbeitet ist. Hierdurch kann der Benutzer sämtliche zur Durchführung von Bezahlvorgang erforderlichen Informationen mit sich führen, ohne hierzu sein üblicherweise erheblich teureres Mobiltelefon zu benötigen, was insbesondere bei Großveranstaltungen wie Fußballspielen oder Rockfestivals von Vorteil sein kann.

Vorteilhafte Weiterbildungen der Erfindung sind Gegenstand der Unteransprüche.

Bei einer Weiterbildung des Verfahrens ist vorgesehen, dass vor dem Übernehmen des Veranstaltungscodes ein Zugreifen auf die externe Veranstaltungsdatenbank und eine Benutzerabfrage zum Auswählen einer in der externen Veranstaltungsdatenbank gespeicherten Veranstaltung anhand einer Eingabe des Benutzers im Rahmen des computerimplementierten Verfahrens vorgenommen werden.

Beispielsweise umfasst die Durchführung des Verfahrens die Verwendung eines auf dem digitalen Endgerät ablaufenden Darstellungsprogramms, das insbesondere als Webbrowser ausgebildet sein kann, um die in der externen Veranstaltungsdatenbank hinterlegten Daten bei dem Zugriff im Rahmen des Verfahrens in ansprechender Form auf einem dem digitalen Endgerät zugeordneten Bildschirm für den Benutzer sichtbar zu machen.

Ferner erfolgt eine Auswahl einer Veranstaltung, die in der Veranstaltungsdatenbank enthalten ist und die mit Hilfe des Darstellungsprogramms für den Benutzer dargestellt wird, durch eine im Rahmen der Verfahrensdurchführung vorgenommene Benutzerabfrage. Beispielhaft kann vorgesehen sein, dass ein Benutzer durch Bewegung eines Mauszeigers oder durch eine Fingerbewegung auf einem berührungsempfindlichen Bildschirm oder durch eine Spracheingabe eine in Frage kommende Veranstaltung anwählt und in einem nachfolgenden Schritt durch eine bestätigende Eingabe, beispielsweise durch Drücken einer Maustaste oder durch eine weitere Fingerbewegung auf den berührungsempfindlichen Bildschirm oder durch eine weitere Spracheingabe die gewünschte Auswahl bestätigt.

Alternativ ist vorgesehen, dass das Übernehmen des mit der Veranstaltung verknüpften und von der externen Veranstaltungsdatenbank bereitgestellten Veranstaltungscodes ein Auslesen des Veranstaltungscodes aus einer graphischen Darstellung, insbesondere aus der Gruppe: Barcode, QR-Code, Micro-QR-Code, Secure-QR-Code, iQR-Code, Frame-QR-Code, mit einem Bildsensor umfasst. Dieser Verfahrensschritt ist dann von Bedeutung, wenn der Zugriff auf die externe Veranstaltungsdatenbank mit einem ersten digitalen Endgerät wie beispielsweise einem Personalcomputer vorgenommen wird, während die Verfahrensdurchführung mit einem zweiten digitalen Endgerät wie beispielsweise einem Mobiltelefon vorgenommen wird. Um für diese Vorgehensweise dem Benutzer eine komfortable Eingabe der ausgewählten Veranstaltung in das auf dem Mobiltelefon ablaufende computerimplementierte Verfahren zu ermöglichen ist es vorgesehen, dass der Veranstaltungscode in einer graphischen Darstellung auf dem ersten digitalen Endgerät dargestellt wird und in diesem Fall durch Nutzung einer am zweiten digitalen Endgerät angebrachten Kamera und einer zugehörigen Software zur Auswertung des Kamerabildes, die im zweiten digitalen Endgerät abläuft, ausgelesen werden kann.

Bevorzugt ist vorgesehen, dass aus der externen Veranstaltungsdatenbank ein mit dem Veranstaltungscode verknüpfter Bedingungsdatensatz ausgelesen wird und dass ein Vergleich des Bedingungsdatensatzes mit den gespeicherten Benutzerdaten vorgenommen wird und dass eine Durchführung des Bezahlvorgangs nur bei Vorliegen einer vorgegebenen Übereinstimmung zwischen den Benutzerdaten und dem Bedingungsdatensatz erfolgt. Beispielhaft kann vorgesehen sein, dass im Bedingungsdatensatz ein Mindestalter für eine Teilnahme an einer Veranstaltung hinterlegt ist und die Durchführung des Bezahlvorgangs nur dann vorgenommen werden kann, wenn anhand eines Vergleichs des Bedingungsdatensatzes mit den gespeicherten Benutzerdaten festgestellt werden kann, dass der Benutzer, der den Bezahlvorgang durchführen möchte, die vom Veranstaltungsanbieter festgesetzten Voraussetzungen, beispielsweise ein Mindestalter, erfüllt.

Vorteilhaft ist es, wenn für das Durchführen des Bezahlvorgangs ein Zugriff auf ein externes Bezahlsystem vorgenommen wird, dass der Zugriff auf das externe Bezahlsystem durch eine Benutzereingabe freigegeben wird und dass die Übertragung des mit dem Veranstaltungscode und den Benutzerdaten verknüpften Geldbetrags unmittelbar von dem externen Bezahlsystem auf das Guthabenkonto erfolgt. Bei einem solchen externen Bezahlsystem kann es sich beispielsweise um ein Bezahlsystem einer Bank oder einer Kreditkartengesellschaft oder um einen ausschließlich auf elektronische Bezahlvorgänge ausgerichtete System von Anbietern wie Paypal oder Amazon Pay handeln. Durch die Nutzung derartiger externe Bezahlsysteme entfällt zum einen die Notwendigkeit zur Erstellung eines eigenen Bezahlsystems, bei dem hohe Sicherheitsanforderungen zu erfüllen sind, andererseits entfallen für einen Benutzer aufwändige Eingaben von Kontodaten und anderen Informationen, die zur Abwicklung eines Bezahlvorgangs erforderlich sind. Durch die direkte Übertragung des gewünschten Geldbetrags vom externen Bezahlsystem auf das Guthabenkonto können Sicherheitsrisiken, die mit derartigen Geldtransfers verbunden sind, auf ein Minimum reduziert werden.

Bei einer Weiterbildung des Verfahrens ist vorgesehen, dass ein Vergleich des Guthaben-Datensatzes mit dem übernommenen Veranstaltungscode und den gespeicherten Benutzerdaten und dem beim Bezahlvorgang freigegebenen Geldzahlung vorgenommen wird und dass das Aktivieren der Schreibfunktion für die Ausgabeschnittstelle, insbesondere für das Nahfeld-Kommunikationsgerät, nur für den Fall freigegeben wird, dass ein vorgegebenes Ergebnis des Vergleichs vorliegt und andernfalls eine Fehlermeldung ausgegeben wird. Durch diese Prüffunktion wird gewährleistet, dass nur dann ein Schreibvorgang für den separat ausgebildeten, benutzerspezifischen Datenträger durchgeführt werden kann, wenn eine Übereinstimmung zwischen den vom Guthabenkonto in Form des Guthaben-Datensatzes zurückgemeldeten Daten und den während der Durchführung des computerimplementierten Verfahrens vom Benutzer zur Durchführung des Bezahlvorgangs bereitgestellten Daten besteht. Andernfalls wird dem Benutzer eine Fehlermeldung zur Verfügung gestellt, damit dieser die Möglichkeit erhält, sich in geeigneter Weise, insbesondere auf elektronischem Wege, mit dem Anbieter des Guthabenkontos und/oder dem Anbieter des externen Bezahlsystems zur Klärung der aufgetretenen Abweichungen in Verbindung zu setzen.

In weiterer Ausgestaltung des Verfahrens ist vorgesehen, dass in den Guthaben-Datensatz oder in das Guthaben-Datenpaket eine Einlassbestätigung hinterlegt wird, mit der eine Verwendung eines Teilbetrags des auf das Guthabenkonto übertragenen Geldbetrags für die Bezahlung des für die ausgewählte Veranstaltung vorgesehenen Eintrittsentgelts bestätigt wird. Damit kann der separat ausgebildete, benutzerspezifischen Datenträger nach der Durchführung des Schreibvorgangs durch das computerimplementierte Verfahren als elektronische Eintrittskarte eingesetzt werden, die beispielsweise an entsprechend ausgebildeten Einlassstationen zu Beginn der Veranstaltung abgefragt und in geeigneter Weise entwertet werden kann.

Zweckmäßig ist es, wenn eine Rückerstattung eines Restguthabens von dem Guthabenkonto durch einen Zugriff auf das, insbesondere in der Veranstaltungsdatenbank geführte, Guthabenkonto unter Verwendung des Guthaben-Datensatzes oder des Guthaben-Datenpakets und eines externen Bezahlsystems auf ein Nutzerkonto vorgenommen wird. Hierbei liegen die gleichen Überlegungen wie bei der Durchführung des Bezahlvorgangs zu Grunde, dem Benutzer wird hiermit einen sicherer Weg für einen Transfer eines nicht genutzten Geldbetrags vom Guthabenkonto, das insbesondere beim Veranstalter geführt wird, auf das eigene Nutzerkonto zur Verfügung gestellt. Das Nutzerkonto kann ein Konto sein, das bei einer Bank geführt wird, insbesondere ein Girokonto. Alternativ kann es sich bei dem Nutzerkonto um ein Konto handeln, das vom Benutzer in der Veranstaltungsdatenbank oder in einer mit der Veranstaltungsdatenbank verknüpften Kontodatenbank angelegt werden kann, um Rückerstattungsbeträge unkompliziert auf andere Veranstaltungen umbuchen zu können. Dies ist beispielsweise dann von Interesse, wenn der Benutzer mehrere Veranstaltungen ausgewählt hat und nach dem Besuch einer oder mehrerer der ausgewählten Veranstaltungen die diesen Veranstaltungen zugeordneten Gelbeträge auf ein Guthabenkonto einer zukünftigen Veranstaltung umbuchen möchte.

Bevorzugt ist vorgesehen, dass für die Rückerstattung des Restguthabens eine Ansteuerung der Ausgabeschnittstelle, insbesondere des Nahfeld-Kommunikationsgeräts, zur Durchführung eines, insbesondere kontaktlosen, Auslesevorgangs für den auf dem separat ausgebildeten, benutzerspezifischen Datenträger gespeicherten Guthaben-Datensatz oder für ein aus dem Guthaben-Datensatz erstelltes Guthaben-Datenpaket vorgenommen wird. Durch diese Vorgehensweise kann ein Abgleich der auf dem separat ausgebildeten, benutzerspezifischen Datenträger abgelegten Daten mit den auf dem Guthabenkonto abgelegten Daten im Hinblick auf eventuelle Abweichungen zwischen den Guthabenbeträgen vorgenommen werden und für den Fall, dass eine derartige Abweichung vorliegt, eine Fehlermeldung an den Benutzer ausgegeben werden, damit sich dieser in geeigneter Weise, insbesondere auf elektronischem Wege, mit dem Anbieter des Guthabenkontos zur Klärung der aufgetretenen Abweichungen in Verbindung setzen kann.

In weiterer Ausgestaltung des Verfahrens ist vorgesehen, dass nach dem Ermitteln des auf dem Guthabenkonto geführten Restguthabens und vor dem Übertragen des Restguthabens auf das Nutzerkonto ein Löschen oder dauerhaftes Sperren des auf dem separat ausgebildeten, benutzerspezifischen Datenträgers gespeicherten Guthaben-Datensatzes oder Guthaben-Datenpakets durch Aktivieren der Schreibfunktion für die Ausgabeschnittstelle, insbesondere für das Nahfeld-Kommunikationsgerät, durchgeführt wird. Durch diese Maßnahme soll ein eindeutiger Status für den veranstaltungsspezifischen Guthaben-Datensatz bzw. das veranstaltungsspezifische Guthaben-Datenpaket erzielt werden, um dem Benutzer bei einer Abfrage des benutzerspezifischen Datenträgers auch für bereits länger zurückliegende Veranstaltungen klare Informationen über eventuell vorhandene Restguthaben geben zu können.

Die Aufgabe der Erfindung wird auch mit einer Datenverarbeitungsvorrichtung gelöst, die Mittel zur Ausführung des erfindungsgemäßen Verfahrens aufweist. Eine derartige Datenverarbeitungsvorrichtung kann insbesondere als Mobiltelefon (Smartphone) mit der Möglichkeit zur Verwendung von Applikationen (Apps), die von Drittanbietern bereitgestellt werden, ausgebildet sein. Vorzugsweise ist vorgesehen, dass die jeweilige Applikation, die den Programmcode zur Durchführung des erfindungsgemäßen computerimplementierten Verfahrens enthält, aus einer Datenbank (App-Store) des jeweiligen Betriebssystemanbieters (Android; iOS) für das Mobiltelefon auf das Mobiltelefon geladen und dort in Betrieb genommen werden kann.

Die Aufgabe der Erfindung wird gemäß einem weiteren Aspekt mit folgenden Merkmalen gelöst: Veranstaltungssystem mit einer ersten Datenverarbeitungsvorrichtung, in der eine Veranstaltungsdatenbank mit Veranstaltungsdaten und mit den Veranstaltungsdaten verknüpften Veranstaltungscodes gespeichert ist, mit einer zweiten Datenverarbeitungsvorrichtung, insbesondere einem mobilen Computer, der Mittel zur Ausführung des erfindungsgemäßen Verfahrens sowie ein Nahfeld-Kommunikationsgerät aufweist, mit einem benutzerspezifischen Datenträger, der für eine Nahfeldkommunikation mit einem Nahfeld-Kommunikationsgerät ausgebildet ist, sowie mit einer dritten Datenverarbeitungsvorrichtung, in der eine Kassendatenbank mit benutzerspezifischen Guthabenkonten gespeichert ist, und mit mehreren Betreiberendgeräten, die jeweils mit der dritten Datenverarbeitungsvorrichtung verbunden sind und die jeweils ein Nahfeld-Kommunikationsgerät aufweisen, wobei die Betreiberendgeräte derart eingerichtet sind, dass ein Guthaben-Datensatz unter Verwendung des jeweiligen Nahfeld-Kommunikationsgeräts aus dem benutzerspezifischen Datenträger ausgelesen und mit dem benutzerspezifischen Guthabenkonto verglichen werden kann und nach einer synchronisierten Änderung des benutzerspezifischen Guthabenkontos und des Guthaben-Datensatzes ein Schreibvorgang für den Guthaben-Datensatz unter Verwendung der Ausgabeschnittstelle, insbesondere des jeweiligen Nahfeld-Kommunikationsgeräts, auf den benutzerspezifischen Datenträger vorgenommen wird.

Die in der ersten Datenverarbeitungseinrichtung gespeicherte Veranstaltungsdatenbank wird von einem ersten Dienstleister bereitgestellt, der diese Veranstaltungsdatenbank für eine Vielzahl von Veranstaltern und deren Veranstaltungen zur Verfügung stellt, wobei sich die Dienstleistungen des ersten Dienstleisters über die Bereitstellung der Veranstaltungsdatenbank hinaus beispielsweise auch auf die Bereitstellung von veranstaltungsspezifischen Guthabenkonten und/oder die Bereitstellung eines Bezahlsystems erstrecken können. Ferner kann auch vorgesehen sein, dass der erste Dienstleister auch benutzerspezifische Datenträger anbietet, die auf die Speicherung von Guthaben-Datensätzen und insbesondere auf die Modifikation derartiger Guthaben-Datensätze optimiert sind und beispielsweise spezielle Schutzmechanismen enthalten, mit denen eine Manipulation der Guthaben-Datensätze erschwert wird.

Bei der zweiten Datenverarbeitungsvorrichtung handelt es sich insbesondere um ein Mobiltelefon (Smartphone) mit der Möglichkeit zur Nutzung von Applikationen (Apps), die vom Benutzer aus einer für das jeweilige Betriebssystem des Mobiltelefons zur Verfügung stehenden Applikationsdatenbank (App-Store) herunter geladen werden können. Ferner umfasst das Mobiltelefon ein Nahfeld-Kommunikationsgerät, insbesondere eine Bluetooth-Schnittstelle und/oder eine NFC-Schnittstelle, um eine drahtlose Kommunikation mit dem benutzerspezifischen Datenträger durchführen zu können. Im Rahmen dieser Kommunikation sind sowohl Lesevorgänge vom benutzerspezifischen Datenträger als auch Schreibvorgänge auf den benutzerspezifischen Datenträger vorzusehen.

Der benutzerspezifische Datenträger ist vorzugsweise als elektronischer Schaltkreis (IC / integrated circuit) mit einem nichtflüchtigen Speicher ausgebildet und für einen drahtlosen Lesevorgang und Schreibvorgang zum Auslesen von gespeicherten Daten sowie zum Schreiben von geänderten Daten mittels des Nahfeld-Kommunikationsgeräts eingerichtet. Vorzugsweise ist der benutzerspezifische Datenträger als Bestandteil eines Armbandes oder eines sonstigen, vom Benutzer körpernah zu tragenden Accessoires oder Kleidungsstücks, ausgebildet.

Die dritte Datenverarbeitungsvorrichtung wird vom Veranstalter oder von einem Dienstleister des Veranstalters betrieben und ist nicht notwendigerweise mit der ersten Datenverarbeitungsvorrichtung verknüpft. Die dritte Datenverarbeitungsvorrichtung wird zur Durchführung der Veranstaltung eingesetzt und umfasst eine Kassendatenbank, in der die benutzerspezifischen Guthabenkonten gespeichert sind. Im Lauf der Veranstaltung werden in Abhängigkeit von Leistungen, die der Benutzer in Anspruch nehmen möchte, Abbuchungen vom Guthabenkonto durchgeführt werden. Für die Durchführung der Abbuchungen umfasst die dritte Datenverarbeitungsvorrichtung eine Vielzahl von Betreiberendgeräten, die jeweils mit der dritten Datenverarbeitungsvorrichtung verbunden sind und die jeweils ein Nahfeld-Kommunikationsgerät aufweisen und die beispielsweise vom Servicepersonal des Veranstalters dazu genutzt werden, Dienstleistungen wie den Verkauf von Essen, Getränken, Fanartikeln, etc. mit den Benutzern, die die Veranstaltung besuchen, bargeldlos abwickeln zu können.

Für die Durchführung von Bezahlvorgängen während der Veranstaltung ist vorgesehen, dass das Servicepersonal unter Verwendung der Betreiberendgeräte, die insbesondere mit einem Bildschirm zur Darstellung der vom Benutzer gewünschten Dienstleistung ausgestattet sein können, einen kombinierten Lese- und Schreibvorgang für den benutzerspezifischen Datenträger durchführen können. Hierbei wird der im benutzerspezifischen Datenträger hinterlegte Guthaben-Datensatz unter Verwendung des jeweiligen Nahfeld-Kommunikationsgeräts aus dem benutzerspezifischen Datenträger ausgelesen. Anschließend erfolgt ein Vergleich des ausgewiesenen Guthaben-Datensatzes mit dem benutzerspezifischen Guthabenkonto, das in der Kassendatenbank der dritten Datenverarbeitungsvorrichtung gespeichert ist. Sofern die Datensätze im Hinblick auf vorgebbare, zu prüfende Daten eine ausreichende Übereinstimmung aufweisen, kann zum Einen die Freigabe der gewünschten Dienstleistung vorgenommen werden und zum Anderen eine synchronisierte Änderung des benutzerspezifischen Guthabenkontos und des Guthaben-Datensatzes vorgenommen werden. Hierzu finden ausgehend vom Betreiberendgeräte sowohl ein Schreibvorgang für den Guthaben-Datensatz unter Verwendung de des Nahfeld-Kommunikationsgeräts als auch ein Schreibvorgang für das Guthabenkonto statt.

Bei einer Weiterbildung des Veranstaltungssystems ist vorgesehen, dass wenigstens eine Zugriffsstation mit der dritten Datenverarbeitungsvorrichtung verbunden ist, wobei die Zugriffsstation ein Nahfeld-Kommunikationsgerät aufweist und derart eingerichtet ist, dass ein Guthaben-Datensatz unter Verwendung des Nahfeld-Kommunikationsgeräts aus dem benutzerspezifischen Datenträger ausgelesen und mit dem benutzerspezifischen Guthabenkonto verglichen werden kann, und dass die Zugriffsstation derart eingerichtet ist, dass ein Durchführen eines Bezahlvorgangs zur Übertragung eines zusätzlichen Geldbetrags von einem Nutzerkonto auf das Guthabenkonto ausschließlich für die im Guthaben-Datensatz hinterlegte Veranstaltung erfolgt und dass der zusätzliche Geldbetrag zu dem auf dem Guthabenkonto geführten Geldbetrag addiert wird und ein aktualisierter Guthaben-Datensatz unter Verwendung der Ausgabeschnittstelle, insbesondere des Nahfeld-Kommunikationsgeräts auf den benutzerspezifischen Datenträger geschrieben wird. Die Zugriffsstation dient hierbei zur Übertragung eines zusätzlichen Guthabenbetrags auf das benutzerspezifische Guthabenkonto und kann als virtueller Geldautomat betrachtet werden, bei dem der Benutzer den gewünschten Geldbetrag von seinem Nutzerkonto auf das Guthabenkonto übertragenen kann. Hierbei kann auch vorgesehen sein, dass der Benutzer im Vorfeld eine Beschränkung des maximal übertragbaren Geldbetrags vorgesehen hat, ferner kann vorgesehen sein, dass eine solche Beschränkung auch nach Eingabe zusätzlicher Benutzerdaten wieder aufgehoben werden kann.

In weiterer Ausgestaltung des Veranstaltungssystems ist vorgesehen, dass wenigstens eine Einlassstation vorgesehen ist, die mit einem Nahfeld-Kommunikationsgerät ausgerüstet ist und die zum kontaktlosen Auslesen des im benutzerspezifischen Datenträger gespeicherten Guthaben-Datensatzes oder Guthaben-Datenpakets, zum Ermitteln einer im Guthaben-Datensatz oder Guthaben-Datenpaket hinterlegten Einlassbestätigung und zum kontaktlosen Schreiben des Guthaben-Datensatzes oder Guthaben-Datenpakets mit entwerteter Einlassbestätigung auf den benutzerspezifischen Datenträger ausgebildet ist. Vorzugsweise ist vorgesehen, dass mit derartigen Einlassstationen eine schnelle und hoch automatisierte Zugangskontrolle für die Veranstaltung durchgeführt werden kann. Beispielhaft kann die Einlassstation neben dem Nahfeld-Kommunikationsgerät auch eine Personenschleuse umfassen, in die der Benutzer eintritt, um nach Durchführung des kontaktlosen Auslesevorgangs für den benutzerspezifischen Datenträger und positiver Prüfung der Einlassbestätigung der Veranstaltungsort betreten zu können. Bei negativer Prüfung der Einlassbestätigung, beispielsweise bei bereits entwerteter Einlassbestätigung, ist ein Verlassen der Personenschleuse nur in einen Bereich außerhalb des Veranstaltungsorts möglich.

Bevorzugt ist vorgesehen, dass die Einlassstation zur Bereitstellung eines Einlasssignals bei Vorliegen der im Guthaben-Datensatz oder Guthaben-Datenpakets hinterlegten Einlassbestätigung ausgebildet ist und mit der dritten Datenverarbeitungsvorrichtung verbunden ist, wobei die dritte Datenverarbeitungsvorrichtung derart eingerichtet ist, dass eine Änderung des benutzerspezifischen Guthabenkontos und des Guthaben-Datensatzes oder Guthaben-Datenpakets ausschließlich bei Vorliegen eines Einlasssignals von der Einlassstation freigegeben ist. Durch diese Kopplung zwischen der Einlassstation und dem Guthabenkonto wird vermieden, dass auf ein benutzerspezifisches Guthabenkonto zugegriffen wird, ohne dass der berechtigte Benutzer (bereits) an der Veranstaltung teilnimmt. Ferner kann dadurch geprüft werden, ob der Benutzer in der vorgesehenen Weise, also durch Passieren der Einlassstation, auf den Veranstaltungsort gelangt ist.

Eine vorteilhafte Ausführungsform der Erfindung ist in der Zeichnung dargestellt. Hierbei zeigt:

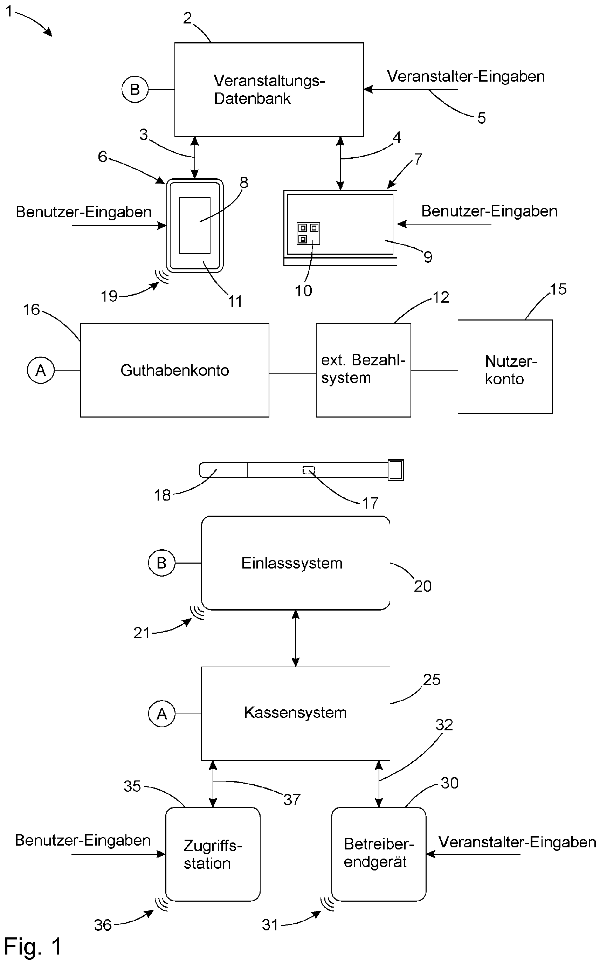

- Figur 1: eine schematische Übersichtsdarstellung der zur Durchführung des erfindungsgemäßen Verfahrens einsetzbaren Komponenten eines Veranstaltungssystems.

Ein in der einzigen Figur rein schematisch gezeigtes Veranstaltungssystem 1 kann beispielsweise zur Durchführung von Großveranstaltungen wie Sportereignissen, Konzerten, Kunstausstellungen etc. oder auch zum Betreiben von Einrichtungen wie Campingplätzen, Schwimmbädern etc. genutzt werden. Prinzipiell kann ein solches Veranstaltungssystem 1 für alle Anwendungen eingesetzt werden, bei denen gewährleistet werden soll, dass eine große Anzahl von Benutzern in effizienter Weise auf kostenpflichtige Leistungen eines Veranstalters zugreifen kann und eine zuverlässige und schnelle Abrechnung dieser kostenpflichtigen Leistungen durchgeführt werden kann.

Wie der rein schematischen Darstellung der Figur 1 entnommen werden kann, umfasst das Veranstaltungssystem 1 eine Veranstaltungsdatenbank 2, bei der es sich um eine elektronische Datenbank handelt, die auf einem nicht näher dargestellten Computer, insbesondere einem Server oder einer Cloud, gespeichert sein kann. Eine Durchführung von Anfragen an die Veranstaltungsdatenbank 2 sowie eine Übertragung von Veranstaltungsdaten und mit den Veranstaltungsdaten verknüpften Veranstaltungscodes erfolgt vorzugsweise über Internetdatenverbindungen 3, 4, 5.

Rein exemplarisch ist vorgesehen, dass ein Veranstalter unter Verwendung eines nicht dargestellten Computers, der über die Internetdatenverbindung 3 mit der Veranstaltungsdatenbank 2 verbunden ist, eine Speicherung von Veranstalter-Eingaben in der Veranstaltungsdatenbank 2 veranlassen kann. Beispielsweise handelt es sich bei den Veranstalter-Eingaben um Daten, die einen Zeitpunkt einer Veranstaltung, eine Art der Veranstaltung, einen Ort der Veranstaltung, einen Eintrittspreis für die Veranstaltung, eine Grafik für eine Bildschirmdarstellung der Veranstaltung beinhalten und die für eine Weitergabe an Benutzer der Veranstaltungsdatenbank 2 bestimmt sein können. Hierbei kann vorgesehen sein, dass die Veranstaltungsdatenbank 2 dazu ausgebildet ist, gewisse vordefinierte Mindestanforderungen, die von den Veranstalter-Eingaben einzuhalten sind, zu überprüfen und nur für den Fall, dass diese Überprüfung mit einem positiven Ergebnis abgeschlossen werden konnte, einen Zugriff von Benutzern auf diese Veranstalter-Eingaben ermöglicht. Die Veranstaltungsdatenbank 2 wird von einem ersten Dienstleister bereitgestellt, bei dem es sich üblicherweise nicht um einen Veranstalter handelt, vielmehr ist der ersten Dienstleister typischerweise ein reines Vermittlungsunternehmen, das die Technologie für die Veranstaltungsdatenbank 2 bereitstellt und in Betrieb hält.

Wurde eine Überprüfung von Veranstalter-Eingaben positiv abgeschlossen, erfolgt durch den ersten Dienstleister eine Freigabe der durch die Veranstalter-Eingaben beschriebenen Veranstaltung in der Veranstaltungsdatenbank 2. Anschließend kann diese Veranstaltung von Benutzern, die wahlweise ein Mobiltelefon 6 oder einen Personalcomputer 7 nutzen, durch eine entsprechende Abfrage der Veranstaltungsdatenbank 2 unter Verwendung der jeweiligen Internetdatenverbindung 3 bzw. 4 in der Veranstaltungsdatenbank 2 aufgerufen werden. Hierzu ist insbesondere vorgesehen, dass von der Veranstaltungsdatenbank 2 geeignete Daten an einen Webbrowser zur Verfügung gestellt werden, der auf dem Mobiltelefon 6 oder dem Personalcomputer 7 betrieben wird und mit dessen Hilfe dem Benutzer eine grafische Darstellung der in der Veranstaltungsdatenbank 2 hinterlegten Veranstaltungsdaten visualisiert werden kann.

Bei einer Verwendung eines Mobiltelefons 6 durch den Benutzer kann eine Abfrage der Veranstaltungsdatenbank 2 entweder durch einen allgemeinen Webbrowser, der auf dem Mobiltelefon 6 betrieben wird, oder durch einen spezifischen Webbrowser, der in einem als Applikation 8 bezeichneten computerimplementierten Verfahren auf dem Mobiltelefon 6 betrieben wird, vorgenommen werden. Bei der Verwendung eines allgemeinen Webbrowsers ist nach Durchführung des Auswahlvorgangs für die gewünschte Veranstaltung eine Bereitstellung von Veranstaltungsdaten und eines Veranstaltungscodes durch die Veranstaltungsdatenbank 2 vorgesehen, wobei die bereitgestellten Veranstaltungsdaten und der bereitgestellte Veranstaltungscode anschließend an die auf dem Mobiltelefon 6 betreibbare Applikation 8 übertragen werden können. Wird die Applikation 8 bereits der Auswahl der Veranstaltung aus der Veranstaltungsdatenbank 2 eingesetzt, findet eine Bereitstellung der Veranstaltungsdaten und des Veranstaltungscodes unmittelbar an die Applikation 8 statt, so dass kein weiterer Vorgang erforderlich ist.

Findet hingegen eine Auswahl der Veranstaltung aus der Veranstaltungsdatenbank 2 unter Zuhilfenahme eines Personalcomputers 7 statt, auf dem ein geeigneter Webbrowser abläuft, kann am Ende des Auswahlvorgangs vorgesehen sein, dass die Veranstaltungsdatenbank 2 den Webbrowser dazu veranlasst, auf einem Bildschirm 9 des Personalcomputers 7 eine grafische Repräsentation zumindest des Veranstaltungscodes vorzunehmen, die rein exemplarisch als QR-Code 10 in der Figur 1 gezeigt ist. Dieser QR-Code 10 kann anschließend mit der nicht dargestellten Kamera des Mobiltelefons 6 aufgenommen werden und führt, vorzugsweise automatisch, zum Start der Applikation 8, wobei die im QR-Code 10 enthaltenen Daten unmittelbar in die Applikation 8 übernommen werden und es dem Benutzer ermöglichen, ohne weitere Eingaben hinsichtlich der ausgewählten Veranstaltung mit einem nachfolgenden, nunmehr direkt auf die ausgewählte Veranstaltung bezogenen Schritt fortzufahren.

Für die weitere Beschreibung wird davon ausgegangen, dass der Benutzer nunmehr die auf dem Mobiltelefon 6 ablaufende Applikation 8 durch Eingaben in das Mobiltelefon 6, beispielsweise mittels Fingereingaben auf einen berührempfindlichen Bildschirm 11 oder mittels einer Spracheingabe durchführt. Beispielhaft ist vorgesehen, dass der Benutzer unter Verwendung der Applikation 8 eine Benutzereingabe durchführt, mit der eine Auswahl eines Geldbetrags durchgeführt wird, den der Benutzer für die Teilnahme an der Veranstaltung verwenden möchte. Hierzu kann entweder die Bereitstellung von Eingabefeldern mit vorgegebenen Beträgen auf dem Bildschirm 11 des Mobiltelefons 6 oder die freie Eingabe eines Betrags in einem geeigneten Eingabefeld auf dem Bildschirm 11 vorgesehen sein.

In einem anschließenden Schritt wird eine Verbindung der Applikation 8 mit einem externen Bezahlsystem 12 hergestellt. Hierbei kann vorgesehen sein, dass der Benutzer weitere Eingaben auf den Bildschirm 11 durchzuführen hat, um sich gegenüber dem Bezahlsystem 12 zu identifizieren und seine Berechtigung zum Zugriff auf das Bezahlsystem 12 zu bestätigen. Sobald dies der Fall ist, kann unter Verwendung der Applikation 8 und des externen Bezahlsystems 12 ein vom Benutzer ausgewählter Geldbetrag von einem Nutzerkonto 15 des Benutzers auf ein Guthabenkonto 16 durchgeführt werden. Hierbei ist vorgesehen, dass der vom Nutzerkonto 15 auf das Guthabenkonto 16 übertragene Geldbetrag mit dem Veranstaltungscode der ausgewählten Veranstaltung verknüpft wird und als Guthaben dem Guthabenkonto 16 gespeichert wird.

Für einen Abschluss dieses Buchungsvorgangs ist vorgesehen, dass vom Guthabenkonto 16 ein Guthaben-Datensatz an die Applikation 8 zurückübertragen wird, wobei dieser Guthaben-Datensatz zumindest Informationen über den auf dem Guthabenkonto 16 für den Benutzer gespeicherten Geldbetrag und den dort ebenfalls gespeicherten Veranstaltungscode enthält.

Vorzugsweise ist vorgesehen, dass die Applikation 8 bei Eintreffen des Guthaben-Datensatzes eine Überprüfung der darin enthaltenen Informationen mit Informationen durchführt, die im vorherigen Schritt von der Applikation 8 an das externe Bezahlsystem 12 zur Verfügung gestellt wurden, um sicherzugehen, dass die vom Benutzer gewünschte Geldübertragung von seiner Nutzerkonto 15 auf das Guthabenkonto 16 auch korrekt abgeschlossen wurde.

Sofern die Überprüfung positiv abgeschlossen werden konnte, ist die Applikation 8 dazu ausgebildet, eine Benutzerabfrage dahingehend vorzunehmen, dass der Benutzer aufgefordert wird, den nunmehr vorliegenden Guthaben-Datensatz oder ein aus dem Guthaben-Datensatz erstelltes Guthaben-Datenpaket durch Ansteuerung einer Ausgabeschnittstelle des Mobiltelefons 6 an einen separat ausgebildeten, benutzerspezifischen Datenträger 17 zu übertragen. Rein exemplarisch ist der Datenträger 17 in einem Armband aufgenommen, das der Benutzer am Handgelenk anbringen kann. Besonders bevorzugt ist vorgesehen, dass die Ausgabeschnittstelle des Mobiltelefons 6 für eine Nahfeld-Kommunikation gemäß dem NFC-Kommunikationsprotokoll ausgebildet ist und dass der benutzerspezifische Datenträger 17 ebenfalls für eine solche Nahfeld-Kommunikation eingerichtet ist. In diesem Fall erfolgt durch die Applikation 8 eine Ansteuerung der als Nahfeld-Kommunikationsgerät ausgebildeten und nicht näher dargestellten Ausgabeschnittstelle, wodurch es zu einer Bereitstellung eines elektromagnetischen Felds 19 kommt, das für eine Durchführung eines Schreibvorgangs auf den Datenträger 17 genutzt werden kann, sofern sich der Datenträger 17 im Erfassungsbereich des elektromagnetischen Felds 19 befindet.

Im Zuge dieses Schreibvorgangs erfolgt die Übertragung des Guthaben-Datensatzes oder des Guthaben-Datenpakets auf den Datenträger 17 und steht nunmehr dem Benutzer für die Teilnahme an der ausgewählten Veranstaltung zur Verfügung.

Rein exemplarisch ist vorgesehen, dass in dem Guthaben-Datensatz oder Guthaben-Datenpaket, wie es auf dem Datenträger 17 gespeichert ist, eine Einlassbestätigung enthalten ist, die auch als elektronische Eintrittskarte betrachtet werden kann und die nur dann zur Verfügung gestellt wird, wenn der vom Benutzer über das externe Bezahlsystem 12 freigegebene Geldbetrag ausreichend war, um das Eintrittsentgelt, das vom Veranstalter für die ausgewählte Veranstaltung festgelegt wurde, zu bezahlen.

Ferner ist rein exemplarisch vorgesehen, dass für eine Teilnahme an der ausgewählten Veranstaltung das Passieren eines Einlasssystems 20 vorgesehen ist. Das Einlasssystem 20 kann beispielsweise eine nicht dargestellte Personenschleuse umfassen, in die der Benutzer eintritt und in der mit Hilfe eines nicht näher dargestellten Nahfeld-Kommunikationsgeräts ein, insbesondere gemäß dem NFC-Kommunikationsprotokoll codiertes, elektromagnetisches Feld 21 bereitgestellt wird. Mit dem elektromagnetischen Feld 21 kann der benutzerspezifischen Datenträger 17 ausgelesen werden und es kann eine Prüfung vorgenommen werden, ob im Guthaben-Datensatz oder Guthaben-Datenpaket eine Einlassbestätigung enthalten ist. Rein exemplarisch kann vorgesehen sein, dass hierzu eine Verknüpfung des einer Systems 20 mit der Veranstaltungsdatenbank 2 über die mit "B" bezeichnete Schnittstelle, bei der sich insbesondere um eine Internetdatenverbindung, vorgesehen ist.

Sobald der Benutzer das Einlasssystem 20 passiert hat und sich auf dem nicht näher dargestellten Veranstaltungsgelände befindet, werden ihm typischerweise eine Vielzahl von kostenpflichtigen Dienstleistungen wie beispielsweise Getränkeverkauf, Essensverkauf, Fanartikel-Verkauf, etc. angeboten.

Um derartige kostenpflichtige Dienstleistungen wahrnehmen zu können, ist es vorgesehen, dass der Benutzer den benutzerspezifischen Datenträger 17 in den Erfassungsbereich eines Betreiberendgeräts 30 bringt, das ein nicht näher dargestelltes Nahfeld-Kommunikationsgerät umfasst und zur Bereitstellung eines elektromagnetischen Feldes 31 ausgebildet ist. Typischerweise werden derartige Betreiberendgeräte 30 vom Servicepersonal des Veranstalters an denjenigen Orten, an denen kostenpflichtige Dienstleistungen erbracht werden sollen, bereitgestellt und der Benutzer erhält die kostenpflichtige Dienstleistung, nachdem er den hierfür erforderlichen Geldbetrag unter Ausnutzung des Betreiberendgeräts 30 bereitgestellt hat. Beispielhaft ist vorgesehen, dass ein Servicemitarbeiter des Veranstalters zunächst entsprechend den Wünschen des Benutzers geeignete Veranstalter-Eingaben wie beispielsweise Essenswünsche oder Getränkewünsche in das Betreiberendgerät 30 eingibt. Anschließend erfolgt eine Bestätigung der gewünschten Dienstleistung in Verbindung mit einem dafür erforderlichen Bezahlvorgang durch die Annäherung des benutzerspezifischen Datenträger 17 an das Betreiberendgerät 30, wobei hierdurch kontaktlos über das elektromagnetische Feld 31 ein kombinierter Lese- und Schreibvorgang für den benutzerspezifischen Datenträger 17 sowie für das Guthabenkonto 16 vorgenommen werden kann. Zu diesem Zweck ist das Betreiberendgerät 30 über eine Datenverbindung 32, die wahlweise kabelgebunden oder kabellos ausgebildet sein kann, mit einem Kassensystem 25 verbunden.

Im Zuge dieses kombinierten Lese- und Schreibvorgangs erfolgt zunächst ein Abgleich des auf dem benutzerspezifischen Datenträger 17 gespeicherten Guthaben-Datensatzes oder Guthaben-Datenpakets mit dem Guthaben Datensatz, der im Guthabenkonto 16 gespeichert ist. Für diesen Abgleich ist vorgesehen, dass das Kassensystem 25 über die mit "A" bezeichnete Schnittstelle, bei der sich insbesondere um eine Internetdatenverbindung, mit dem Guthabenkonto 16 verbunden werden kann. Alternativ ist vorgesehen, dass das Guthabenkonto 16 als integraler Bestandteil des Kassensystems 25 ausgebildet ist.

Bei Übereinstimmung der miteinander verglichen Daten erfolgt anschließend eine Reduzierung des auf dem Guthabenkonto 16 für den Benutzer gespeicherten Geldbetrags um diejenige Summe, die der Benutzer zur Wahrnehmung der Dienstleistung freigeben will. Anschließend erfolgt ein synchroner Schreibvorgang für das Guthabenkonto 16 mit einem aktualisierten Guthaben-Datensatz und für den benutzerspezifischen Datenträger 17 mit einem aktualisierten Guthaben-Datensatz oder Guthaben-Datenpaket.

Sofern sich bei der Durchführung eines derartigen Bezahlvorgangs ergeben sollte, dass der auf dem Guthabenkonto 16 hinterlegte Geldbetrag einen vom Benutzer oder vom Veranstalter vorgegebenen Schwellwert unterschreitet oder möglicherweise nicht ausreichend ist, um die vom Benutzer gewünschten Dienstleistungen zu bezahlen, erfolgt eine Nachrichtenausgabe auf dem Betreiberendgerät 30, wodurch der Servicemitarbeiter den Benutzer darauf aufmerksam machen kann, dass möglicherweise ein Nachbuchen eines weiteren Geldbetrags erforderlich sein kann.

Zur Übertragung eines weiteren Geldbetrags vom Nutzerkonto 15 auf das Guthabenkonto 16 kann vorgesehen sein, dass der Benutzer eine Zugriffsstation 35 aufsucht, die auch als virtueller Geldautomat bezeichnet werden kann. Die Zugriffsstation 35 umfasst ein nicht näher dargestelltes Nahfeld-Kommunikationsgerät, das ein, insbesondere gemäß dem NFC-Kommunikationsprotokoll codiertes, elektromagnetisches Feld 36 bereitstellen kann. Mittels des elektromagnetischen Felds 36 kann eine Lese- und Schreibkommunikation zwischen der Zugriffsstation 35 und dem damit über die Datenverbindung 37 verbundenen Kassensystem 25 sowie dem über die Schnittstelle "A" mit dem Kassensystem 25 verbundenen Guthabenkonto 16 und dem benutzerspezifischen Datenträger 17 hergestellt werden. Beispielhaft ist vorgesehen, dass der Benutzer zunächst den benutzerspezifischen Datenträger 17 in den Erfassungsbereich des elektromagnetischen Felds 36 der Zugriffsstation 35 bringt und dadurch einen Auslesevorgang für den auf dem benutzerspezifischen Datenträger 17 gespeicherten Guthaben-Datensatz oder Guthaben-Datenpaket und für den auf dem Guthabenkonto 16 gespeicherten Guthaben-Datensatz bewirkt. Anschließend führt die Zugriffsstation 35 einen Abgleich der ermittelten Daten durch und kann für den Fall, dass die übermittelten Daten in einer vorgegebenen Weise miteinander übereinstimmen auf einem nicht näher dargestellten Bildschirm ein für den Benutzer noch verfügbares Restguthaben anzeigen. Anschließend kann der Benutzer durch eine Eingabe in die Zugriffsstation 35, beispielsweise durch beginnen eines nicht dargestellten Tastenfelds, den von seinem Nutzerkonto 15 auf das Guthabenkonto 16 zu übertragenden Geldbetrag vorgeben und durch Eingabe einer zusätzlichen Informationen wie einer persönlichen Identifikationsnummer (PIN) die Übertragung des Geldbetrags veranlassen. In einem nachfolgenden Schritt wird der übertragene Geldbetrag dem Guthabenkonto 16 gutgeschrieben und vom Guthabenkonto wird über die Schnittstelle "A" eine Guthaben-Datensatz an die Zugriffsstation 35 zurück übertragen. Sofern der zurück übertragene Guthaben-Datensatz mit dem ursprünglichen Guthaben-Datensatz sowie der zwischenzeitlich freigegebenen Umbuchung des Benutzers übereinstimmt, erfolgt anschließend ein Schreibvorgang für den geänderten Guthaben-Datensatz oder für ein aus dem geänderten Guthaben-Datensatz abgeleitetes Guthaben-Datenpaket auf den benutzerspezifischen Datenträger 17. Hierzu wird der geänderte Guthaben-Datensatz oder das geänderte Guthaben-Datenpaket unter Verwendung des vom nicht dargestellten Nahfeld-Kommunikationsgerät bereitgestellten elektromagnetischen Felds 36 auf den benutzerspezifischen Datenträger geschrieben.

Nach Ende der Veranstaltung kann der Benutzer in seinem Mobiltelefon 6 die Applikation 8 aufrufen und einen synchronisierten Zugriff auf den benutzerspezifischen Datenträger 17 unter Verwendung des nicht dargestellten, im Mobiltelefon 6 enthaltenen Nahfeld-Kommunikationsgeräts und auf das Guthabenkonto 16, insbesondere unter Verwendung des Bezahlsystems 12, durchführen. Im Zuge dieser Zugriffe können der auf dem Guthabenkonto 16 gespeicherte Guthaben-Datensatz sowie der auf den benutzerspezifischen Datenträger 17 gespeicherte Guthaben-Datensatz bzw. das Guthaben-Datenpaket abgerufen werden. Anschließend erfolgt in der Applikation 8 ein Vergleich der in den vorstehend genannten Daten enthaltenen Guthabenbeträge und im Zuge einer geeigneten Benutzereingabe eine Umbuchung des auf dem Guthabenkonto 16 gespeicherten Restguthabens auf das Nutzerkonto 15 des Benutzers. Nach Abschluss dieses Geldtransfers erfolgt durch die Applikation 8 eine Aufforderung an den Benutzer, den benutzerspezifischen Datenträger 17 kontaktlos in den Erfassungsbereich des elektromagnetischen Felds 21 zu bringen, um eine Löschung oder zumindest eine Deaktivierung des veranstaltungsspezifischen Guthaben-Datensatzes bzw. des veranstaltungsspezifischen Guthaben-Datenpakets auf dem benutzerspezifischen Datenträger vorzunehmen. Sofern der Benutzer dieser Aufforderung nicht nachkommt, erfolgt beim nächsten Aufruf der Applikation 8 eine entsprechende Erinnerung. Insbesondere kann vorgesehen sein, dass vor einer Löschung oder Deaktivierung bereits übertragener Guthaben-Datensätze bzw. Guthaben-Datenpakete eine neuerliche Geldzahlung gesperrt ist. Durch diese Maßnahmen soll sichergestellt werden, dass auf dem benutzerspezifischen Datenträger 17 nur aktive Veranstaltungen und zugehörige Geldbeträge enthalten sind, während nicht mehr aktive Veranstaltungen und zugehörige Geldbeträge allenfalls noch für Archivzwecke abrufbar sind.

## Patentansprüche

1. Computerimplementiertes Verfahren für den Zugriff auf ein Guthabenkonto (16), umfassend die Schritte: Übernehmen eines mit einer Veranstaltung verknüpften und von einer externen Veranstaltungsdatenbank (2) bereitgestellten Veranstaltungscodes für eine von einem Benutzer ausgewählte Veranstaltung; Abrufen von gespeicherten Benutzerdaten aus einem, insbesondere lokalen, Speicher; Verknüpfen des übernommenen Veranstaltungscodes mit den Benutzerdaten; Durchführen einer Benutzerabfrage zum Auswählen eines Geldbetrags durch den Benutzer; Durchführen eines Bezahlvorgangs zur Übertragung des mit dem Veranstaltungscode und den Benutzerdaten verknüpften Geldbetrags auf ein, insbesondere in der Veranstaltungsdatenbank (2) geführtes, Guthabenkonto (16); Empfangen eines vom Guthabenkonto (16) bereitgestellten Guthaben-Datensatzes; Aktivieren einer Schreibfunktion durch den Benutzer; Ansteuerung einer Ausgabeschnittstelle, insbesondere eines Nahfeld-Kommunikationsgeräts, und Durchführen des, insbesondere kontaktlosen, Schreibvorgangs für den Guthaben-Datensatz oder für ein aus dem Guthaben-Datensatz erstelltes Guthaben-Datenpaket, auf einen separat ausgebildeten, benutzerspezifischen Datenträger (17).

2. Computerimplementiertes Verfahren nach Anspruch 1, **dadurch gekennzeichnet, dass** vor dem Übernehmen des Veranstaltungscodes ein Zugreifen auf die externe Veranstaltungsdatenbank (2) und eine Benutzerabfrage zum Auswählen einer in der externen Veranstaltungsdatenbank (2) gespeicherten Veranstaltung anhand einer Eingabe des Benutzers vorgenommen werden.

3. Computerimplementiertes Verfahren nach Anspruch 1, **dadurch gekennzeichnet, dass** das Übernehmen des mit der Veranstaltung verknüpften und von der externen Veranstaltungsdatenbank (2) bereitgestellten Veranstaltungscodes ein Auslesen des Veranstaltungscodes aus einer graphischen Darstellung (10), insbesondere aus der Gruppe: Barcode, QR-Code, Micro-QR-Code, Secure-QR-Code, iQR-Code, Frame-QR-Code, mit einem Bildsensor umfasst.

4. Computerimplementiertes Verfahren nach Anspruch 1, 2 oder 3, **dadurch gekennzeichnet, dass** aus der externen Veranstaltungsdatenbank (2) ein mit dem Veranstaltungscode verknüpfter Bedingungsdatensatz ausgelesen wird und dass ein Vergleich des Bedingungsdatensatzes mit den gespeicherten Benutzerdaten vorgenommen wird und dass eine Durchführung des Bezahlvorgangs nur bei Vorliegen einer vorgegebenen Übereinstimmung zwischen den Benutzerdaten und dem Bedingungsdatensatz erfolgt.

5. Computerimplementiertes Verfahren nach Anspruch 1, 2, 3 oder 4, **dadurch gekennzeichnet, dass** für das Durchführen des Bezahlvorgangs ein Zugriff auf ein externes Bezahlsystem (12) vorgenommen wird, dass der Zugriff auf das externe Bezahlsystem (12) durch eine Benutzereingabe freigegeben wird und dass die Übertragung des mit dem Veranstaltungscode und den Benutzerdaten verknüpften Geldbetrags unmittelbar von dem externen Bezahlsystem (12) auf das Guthabenkonto (16) erfolgt.

6. Computerimplementiertes Verfahren nach einem der vorhergehenden Ansprüche, **dadurch gekennzeichnet, dass** ein Vergleich des Guthaben-Datensatzes mit dem übernommenen Veranstaltungscode und den gespeicherten Benutzerdaten und dem beim Bezahlvorgang freigegebenen Geldzahlung vorgenommen wird und dass das Aktivieren der Schreibfunktion für die Ausgabeschnittstelle, insbesondere für das Nahfeld-Kommunikationsgerät, nur für den Fall freigegeben wird, dass ein vorgegebenes Ergebnis des Vergleichs vorliegt und andernfalls eine Fehlermeldung ausgegeben wird.

7. Computerimplementiertes Verfahren nach einem der vorhergehenden Ansprüche, **dadurch gekennzeichnet, dass** in den Guthaben-Datensatz oder in das Guthaben-Datenpaket eine Einlassbestätigung hinterlegt wird, mit der eine Verwendung eines Teilbetrags des auf das Guthabenkonto übertragenen Geldbetrags für die Bezahlung des für die ausgewählte Veranstaltung vorgesehenen Eintrittsentgelts bestätigt wird.

8. Computerimplementiertes Verfahren nach einem der vorhergehenden Ansprüche, **dadurch gekennzeichnet, dass** eine Rückerstattung eines Restguthabens von dem Guthabenkonto (16) durch einen Zugriff auf das, insbesondere in der Veranstaltungsdatenbank (2) geführte, Guthabenkonto (16) unter Verwendung des Guthaben-Datensatzes oder des Guthaben-Datenpakets und eines externen Bezahlsystems (12) auf ein Nutzerkonto (15) vorgenommen wird.

9. Computerimplementiertes Verfahren nach Anspruch 8, **dadurch gekennzeichnet, dass** für die Rückerstattung des Restguthabens eine Ansteuerung der Ausgabeschnittstelle, insbesondere des Nahfeld-Kommunikationsgeräts, zur Durchführung eines, insbesondere kontaktlosen, Auslesevorgangs für den auf dem separat ausgebildeten, benutzerspezifischen Datenträger (17) gespeicherten Guthaben-Datensatz oder für ein aus dem Guthaben-Datensatz erstelltes Guthaben-Datenpaket vorgenommen wird.

10. Computerimplementiertes Verfahren nach Anspruch 9, **dadurch gekennzeichnet, dass** nach dem Ermitteln des auf dem Guthabenkonto (16) geführten Restguthabens und vor dem Übertragen des Restguthabens auf das Nutzerkonto ein Löschen oder dauerhaftes Sperren des auf dem separat ausgebildeten, benutzerspezifischen Datenträgers (17) gespeicherten Guthaben-Datensatzes oder Guthaben-Datenpakets durch Aktivieren der Schreibfunktion für die Ausgabeschnittstelle, insbesondere für das Nahfeld-Kommunikationsgerät, durchgeführt wird.

11. Datenverarbeitungsvorrichtung umfassend Mittel zur Ausführung des Verfahrens nach einem der vorhergehenden Ansprüche.

12. Veranstaltungssystem mit einer ersten Datenverarbeitungsvorrichtung, in der eine Veranstaltungsdatenbank (2) mit Veranstaltungsdaten und mit den Veranstaltungsdaten verknüpften Veranstaltungscodes gespeichert ist, mit einer zweiten Datenverarbeitungsvorrichtung (6), insbesondere einem mobilen Computer, der Mittel zur Ausführung des Verfahrens nach einem der Ansprüche 1 bis 10 sowie ein Nahfeld-Kommunikationsgerät aufweist, mit einem benutzerspezifischen Datenträger (17), der für eine Nahfeldkommunikation mit einem Nahfeld-Kommunikationsgerät ausgebildet ist, sowie mit einer dritten Datenverarbeitungsvorrichtung, in der eine Kassendatenbank (25) mit benutzerspezifischen Guthabenkonten gespeichert ist, und mit mehreren Betreiberendgeräten (30), die jeweils mit der dritten Datenverarbeitungsvorrichtung verbunden sind und die jeweils ein Nahfeld-Kommunikationsgerät aufweisen, wobei die Betreiberendgeräte (30) derart eingerichtet sind, dass ein Guthaben-Datensatz unter Verwendung des jeweiligen Nahfeld-Kommunikationsgeräts aus dem benutzerspezifischen Datenträger ausgelesen und mit dem benutzerspezifischen Guthabenkonto (16) verglichen werden kann und nach einer synchronisierten Änderung des benutzerspezifischen Guthabenkontos (16) und des Guthaben-Datensatzes ein Schreibvorgang für den Guthaben-Datensatz unter Verwendung der Ausgabeschnittstelle, insbesondere des jeweiligen Nahfeld-Kommunikationsgeräts, auf den benutzerspezifischen Datenträger (17) vorgenommen wird.

13. Veranstaltungssystem nach Anspruch 12, **dadurch gekennzeichnet, dass** wenigstens eine Zugriffsstation (35) mit der dritten Datenverarbeitungsvorrichtung verbunden ist, wobei die Zugriffsstation (35) ein Nahfeld-Kommunikationsgerät aufweist und derart eingerichtet ist, dass ein Guthaben-Datensatz unter Verwendung des Nahfeld-Kommunikationsgeräts aus dem benutzerspezifischen Datenträger (17) ausgelesen und mit dem benutzerspezifischen Guthabenkonto verglichen werden kann, und dass die Zugriffsstation (35) derart eingerichtet ist, dass ein Durchführen eines Bezahlvorgangs zur Übertragung eines zusätzlichen Geldbetrags von einem Nutzerkonto (15) auf das Guthabenkonto (16) ausschließlich für die im Guthaben-Datensatz hinterlegte Veranstaltung erfolgt und dass der zusätzliche Geldbetrag zu dem auf dem Guthabenkonto (16) geführten Geldbetrag addiert wird und ein aktualisierter Guthaben-Datensatz unter Verwendung der Ausgabeschnittstelle, insbesondere des Nahfeld-Kommunikationsgeräts auf den benutzerspezifischen Datenträger (17) geschrieben wird.

14. Veranstaltungssystem nach Anspruch 12 oder 13, **dadurch gekennzeichnet, dass** wenigstens eine Einlassstation (20) vorgesehen ist, die mit einem Nahfeld-Kommunikationsgerät ausgerüstet ist und die zum kontaktlosen Auslesen des im benutzerspezifischen Datenträger gespeicherten Guthaben-Datensatzes oder Guthaben-Datenpakets, zum Ermitteln einer im Guthaben-Datensatz oder Guthaben-Datenpaket hinterlegten Einlassbestätigung und zum kontaktlosen Schreiben des Guthaben-Datensatzes oder Guthaben-Datenpakets mit entwerteter Einlassbestätigung auf den benutzerspezifischen Datenträger (17) ausgebildet ist.

15. Veranstaltungssystem nach Anspruch 14, **dadurch gekennzeichnet, dass** die Einlassstation (20) zur Bereitstellung eines Einlasssignals bei Vorliegen der im Guthaben-Datensatz oder Guthaben-Datenpakets hinterlegten Einlassbestätigung ausgebildet ist und mit der dritten Datenverarbeitungsvorrichtung verbunden ist, wobei die dritte Datenverarbeitungsvorrichtung derart eingerichtet ist, dass eine Änderung des benutzerspezifischen Guthabenkontos (16) und des Guthaben-Datensatzes oder Guthaben-Datenpakets ausschließlich bei Vorliegen eines Einlasssignals von der Einlassstation (20) freigegeben ist.
